# EUROPEAN PATENT SPECIFICATION

(11) **EP 3 040 911 B1**
(45) Date of publication and mention of the grant of the patent: **06.05.2020**
(21) Application number: 14840717.4
(22) Date of filing: 07.08.2014
(51) Int. Cl.: G06F 16/532

(54) **QUERY METHOD, APPARATUS, SYSTEM AND CLIENT FOR PRODUCT DESCRIPTION**
ANFRAGEVERFAHREN, -VORRICHTUNG, -SYSTEM UND -CLIENT FÜR PRODUKTBESCHREIBUNG
PROCÉDÉ, APPAREIL, SYSTÈME ET CLIENT D'ANALYSE DE DESCRIPTION DE PRODUIT

(30) Priority: 28.08.2013 CN 201310380904
(43) Date of publication of application: 06.07.2016
(73) Proprietor: Intsig Information Co., Ltd., Shanghai 200433 (CN)
(72) Inventor: ZHEN, Lixin, Shanghai 200433 (CN); WANG, Yue, Shanghai 200433 (CN); DING, Kai, Shanghai 200436 (CN); LONG Teng, Shanghai 200436 (CN); ZHANG, Bin, Shanghai 200436 (CN); GUO, Fengjun, Shanghai 200436 (CN); CHEN, Qingshan, Shanghai 200436 (CN)
(74) Representative: van de Wal, Barend Willem
(86) International application number: PCT/CN2014/083863
(87) International publication number: WO 2015/027805

(56) References cited:
- WO-A1-2012/141655
- CN-A- 101 034 442
- CN-A- 101 950 400
- CN-A- 103 473 279
- US-A1- 2011 085 697
- US-B1- 7 716 089

## Description

### BACKGROUND

### Technical Field

The invention relates to a data query method, in particular to a query method for a product description. The invention also relates to a data query apparatus, in particular to a query apparatus for the product description. The invention further relates to a query system for the product description and a query client end for the product description.

### Related Art

When using a new product, a user needs to read a description inevitably to learn various functions and a method of using the product. However, some products have more functions and parts, a corresponding description has more contents, it is possible that the user does not need some functions, but the user cannot only pertinently read required parts when reading the description. At present, along with popularization of a computer technology, many product descriptions are made into a format of an electronic edition, which can be downloaded from a network. But compared with paper descriptions, the electronic edition descriptions only have a form change instead of a substantial change. Problems existing in the paper product descriptions still exist in the electronic edition product descriptions.

An automatic method to generate product attributes based solely on product images is known for U.S. patent application no. US 2011/0085697 A1, which is considered to be prior art.

### SUMMARY

A technical problem to be solved by the invention is to provide a query method for a product description, a query apparatus for the product description, a query system for the product description and a client end for the product description, which can conveniently help a client to only query a required part of the product description without the trouble of leafing through the description from beginning to end.

The invention solves the problem of image-based query information for product description according to the features recited in the claims.

### BRIEF SPECIFICATION OF THE DRAWINGS

The invention is illustrated in great detail in combination with drawings and embodiments.
FIG. 1 is a module schematic diagram of one embodiment of a query apparatus for a product description of the invention.
FIG. 2 is a module schematic diagram of one embodiment of a query system for a product description of the invention.
FIG. 3 is a module schematic diagram of one embodiment of a query client end for a product description of the invention.
FIG. 4 is a module schematic diagram of another embodiment of a query apparatus for a product description of the invention.
FIG. 5 is a module schematic diagram of another embodiment of a query system for a product description of the invention.
FIG. 6 is a module schematic diagram of another embodiment of a query client end for a product description of the invention.

### DETAILED SPECIFICATION

The invention discloses a query method for a product description, comprising:
establishing a corresponding relation between at least certain part in the product description and first visual data for displaying certain state or part of a described product, and storing the at least certain part in the product description, the first visual data and the corresponding relation therebetween;
extracting first feature information of the first visual data;
acquiring second visual data for displaying certain state or part of the product, extracting second feature information of the second visual data, or directly acquiring second feature information of the second visual data for displaying certain state or part of the product;
comparing the second feature information with the first feature information to determine whether the first visual data and the second visual data display the same state or part of the product, thereby querying a corresponding part in the product description, and returning a query result;
the visual data are pictures or videos and the visual data and the feature information have a one-to-one corresponding relation.

The feature information is a data section uniquely corresponding to certain visual data, there are many kinds of corresponding relations, for example, a corresponding relation is obtained by operation of the visual data through a specific algorithm or is artificially established between the feature information and the visual data. At present, such technology is very mature and a specific implementation process thereof is not repeated herein.

In the query method for the product description, the product description is at least one of a text, picture, audio format or video format. Besides the product description in traditional text and picture formats, the invention can be described by adopting the product description in an audio or video format, for example, a length of audio is made for describing functions or a use method of a product, or a length of video is made for guiding a user to use the product.

In the query method for the product description, there are two ways for directly acquiring the second visual data and second feature information:
1, taking a picture of a certain state or part of the product or the second feature information;
2, acquiring a file containing the second visual data or second feature information.

In terms of directly acquiring the second feature information through taking a picture, the second feature information is made into a label, for example, a character string format, or a format of a bar code and a two-dimension code, which is adhered to a specific part of the product, and content of the second feature information is read through an image recognition technology after taking a picture.

In the query method for the product description, a way of directly acquiring the second visual data and the second feature information also comprises, selecting a portion containing the second visual data from the visual data of large size as the second visual data; or selecting a portion containing the second feature information from the visual data of large size as the second feature information. For example, on a picture of a whole product, a part displaying a certain portion of the product is selected, and such part of the picture is used for describing the product description part of the portion of the product. Or in a length of video of the product, a part or passage of a certain portion of the product displayed in the video is selected, and a product description part of the certain portion of the displayed product is queried or described accordingly.

In order to facilitate a case without a network, the query method for the product description can be realized in a computer system. The product description, first visual data and a corresponding relation thereof are stored in the same computer system, first feature information is extracted in the computer system, the second visual data and second feature information are acquired in the computer system, or the second feature information is directly acquired, and the second feature and the first feature information are compared in the computer system to query a corresponding part in the product description and return a query result.

The query method for the product description is realized based on the network, at all same, or partial same or all different network positions, the product description, the first visual data and a corresponding relation between the at least certain part in the product description and the first visual data are stored, the first feature information is extracted, the second visual data are acquired or the second feature information is directly acquired, the second feature information is extracted from the second visual data, and the second feature information and the first feature information are compared; different network positions perform communication connection by a network, and are used for transmitting the visual data, the feature information or a query result.

In the query method for the product description, the query result may comprise certain part in the product description, and also comprises a positioning indication of certain part in the product description. A query result can be certain part in the product description directly provided to a user, the user may be told with a position where certain required part in the product description is, for example, the user is provided with a network link to look up, or the user is told with which chapter or which page the required part is at.

In an implementation process of the query method for the product description, a product description is assigned, and then in the assigned product description, a corresponding part therein is queried. Different products may have parts with same or similar appearances, but these parts possibly have different functions or use methods. In order to more accurately provide the product description, one specific product description may be pre-assigned, and then the content required by the user is queried in the product description. A product description assigning way can be determined by the user or automatically determined by a hardware system.

The query method for the product description also comprises, newly establishing first visual data of certain state or part of the product described by at least certain part in the product description, establishing a corresponding relation between the at least certain part in the product description and the first visual data, and storing the at least certain part in the product description, the first visual data and a corresponding relation therebetween. Hence, the user can add the first visual data corresponding to a specific part of the description according to needs of the user and future looking up is facilitated.

The query method for the product description also comprises, newly establishing at least certain part in the product description, establishing a corresponding relation between the at least certain part in the product description and the first visual data for displaying certain state or part of the described product, and storing the at least certain part in the product description, the first visual data and a corresponding relation therebetween. Hence, the user can add relevant description corresponding to the specific first visual data by self aiming at a part not specified or clearly specified in the description according to own use experiences, and future looking up is facilitated.

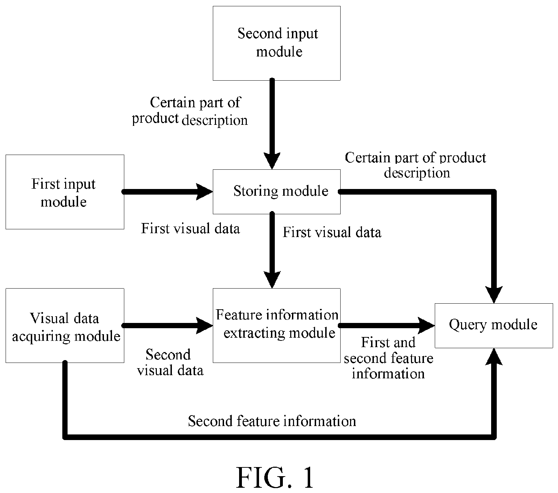

The invention also discloses a query apparatus for a product description for realizing above query method for the product description, as shown in FIG. 1, comprising:
a storing module, storing the product description, first visual data for displaying certain state or part of a product described by at least certain part in the product description, and a corresponding relation between the at least certain part in the product description and the first visual data;
a visual data acquiring module, acquiring second visual data of certain state or part of the product or directly acquiring second feature information of second visual data of certain state or part of the product;
a feature information extracting module, extracting first feature information from the first visual data and second feature information from the second visual data;
a query module, comparing the second feature information with the first feature information to determine whether the first visual data and the second visual data display the same state or part of the product, thereby querying a corresponding part in the product description, and returning a query result;
in the query apparatus for the product description, the visual data are pictures or videos and the visual data and the feature information have a one-to-one corresponding relation.

In the query apparatus for the product description, the product description is at least one of a text, picture, audio format or video format.

In the query apparatus for the product description, the visual data acquiring module comprises a picture taking apparatus, for taking a picture of a certain state or certain part of a product or second feature information, to acquire the second visual data or directly acquire the second feature information.

The query apparatus for the product description also comprises a visual data processing module, selecting a portion containing the second visual data from the visual data of large size as the second visual data; or selecting a portion containing the second feature information from the visual data of large size as the second feature information.

In the query apparatus for the product description, the query result comprises certain part in the product description or at least one of position indications of certain part in the product description.

The query apparatus for the product description also comprises a first input module, inputting and displaying first visual data of certain state or part of a product described by at least certain part in the product description, establishing a corresponding relation between the at least certain part in the product description and the first visual data, and storing the at least certain part in the product description, the first visual data and a corresponding relation therebetween in the storing module.

The query apparatus for the product description also comprises a second input module, inputting at least certain part in the product description, establishing a corresponding relation between the at least certain part in the product description and the first visual data for displaying certain state or part of a described product, and storing the at least certain part in the product description, the first visual data and a corresponding relation therebetween in the storing module.

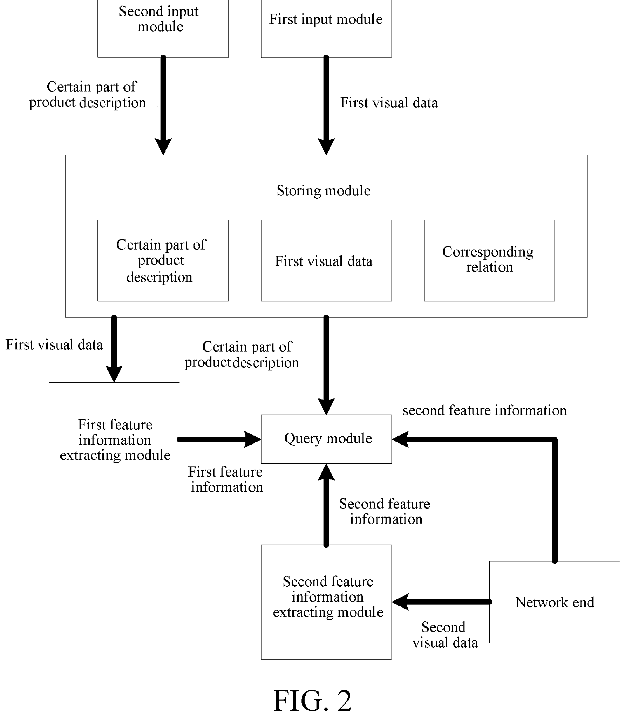

The invention further discloses a query system for a product description for realizing above query method for the product description, as shown in FIG. 2, the query system comprises one network device or a plurality of network devices interconnected by a network, and also comprises:
a storing module, for storing the product description, first visual data for displaying certain state or part of a product described in at least certain part in the product description and a corresponding relation between the first visual data and at least certain part in the product description on at least one network device;
the visual data are pictures or videos, the visual data and the feature information have a one-to-one corresponding relation, and the network device comprises a network server and a client end.

In the query system for the product description, the network device also comprises a first feature information extracting module for extracting first feature information from the first visual data. The first feature information extracting module is arranged on any network device.

The query system for the product description also comprises a query module for comparing the second feature information with the first feature information to determine whether the first visual data and the second visual data display the same state or part of the product, thereby querying a corresponding part in the product description, and returning a query result; the second feature information is sent from a network, or the second visual data are sent from the network, and the second feature information is extracted from the second visual data by a second feature information extracting module. The query module and the second feature information extracting module can be arranged on any network device.

In the query system for the product description, the product description is at least one of a text, picture, audio format or video format.

In the query system for the product description, the query result comprises certain part in the product description or at least one of position indications of certain part in the product description.

The query system for the product description also comprises a first input module, inputting and displaying first visual data of certain state or part of a product described by at least certain part in the product description, establishing a corresponding relation between the at least certain part in the product description and the first visual data, and storing the at least certain part in the product description, the first visual data and a corresponding relation therebetween in the storing module.

The query system for the product description also comprises a second input module, inputting at least certain part in the product description, establishing a corresponding relation between the at least certain part in the product description and the first visual data for displaying certain state or part of a described product, and storing the at least certain part in the product description, the first visual data and a corresponding relation therebetween in the storing module.

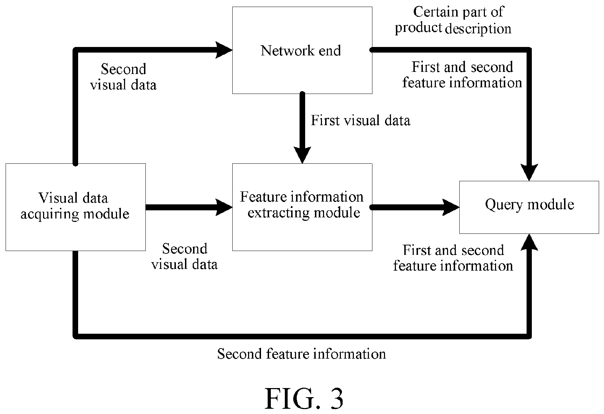

The invention further discloses a query client end for a product description for realizing above query method for the product description, as shown in FIG. 3, comprising:
a visual data acquiring module, acquiring second visual data of certain state or part of the product or directly acquiring second feature information of second visual data of certain state or part of the product;
through a network, based on the second visual data or second feature information, certain part of the product description is queried, and certain part of the product description describes certain state or part of the product displayed by the second visual data;
the visual data are pictures or videos and the visual data and the feature information have a one-to-one corresponding relation.

In the query client end for the product description, if the visual data acquiring module acquires the second visual data, the second feature information can be locally extracted at a query client end for the product description, therefore, the query client end also comprises a second feature information extracting module, extracting the second feature information from the second visual data. In addition, the second visual data can be uploaded by a network, and the second feature information is extracted by other devices on the network.

The query client end for the product description also comprises a first feature information extracting module, the first visual data are downloaded from the network, and the first feature information is extracted from the first visual data by the first feature information extracting module.

In the query client end for the product description, since the first feature information and the second feature information may be same in an extracting way, the first feature information extracting module and the second feature information extracting module are the same module to save system resource.

The query client end for the product description also comprises a query module for comparing the second feature information with the first feature information to determine whether the first visual data and the second visual data display the same state or part of the product, thereby querying a corresponding part in the product description, and returning a query result.

In the query client end for the product description, the query result comprises certain part in the product description or at least one of position indications of certain part in the product description.

In the query client end for the product description, the product description is at least one of a text, picture, audio format or video format.

In the query client end for the product description, the visual data acquiring module comprises a picture taking apparatus, for taking a picture of a certain state or certain part of a product or second feature information, to acquire the second visual data or directly acquire the second feature information.

The query client end for the product description also comprises a visual data processing module, selecting a portion containing the second visual data from the visual data of large size as the second visual data; or selecting a portion containing the second feature information from the visual data of large size as the second feature information.

The query client end for the product description also comprises a first input module, inputting and displaying first visual data of certain state or part of a product described by at least certain part in the product description, establishing a corresponding relation between the at least certain part in the product description and the first visual data, and locally storing or uploading the at least certain part in the product description, the first visual data and a corresponding relation therebetween through a network.

The query client end for the product description also comprises a second input module, inputting at least certain part in the product description, establishing a corresponding relation between the at least certain part in the product description and the first visual data for displaying certain state or part of a described product, and locally storing or uploading the at least certain part in the product description, the first visual data and a corresponding relation therebetween through a network.

The invention also discloses another query method for the product description, the biggest difference between which and above query method for the product description lies in that in above query method for the product description, the first visual data correspond to at least certain part in the product description, while in another query method for the product description, the first feature information corresponds to the at least certain part in the product description. Compared with above query method for the product description, the query method for the product description omits the step of extracting the first feature information from the first visual data.

A technical content of the query method for the product description specifically comprises: establishing a corresponding relation between at least certain part in the product description and first feature information of first visual data for displaying certain state or part of a described product, and storing the at least certain part in the product description, the first feature information and the corresponding relation therebetween;
acquiring second visual data for displaying certain state or part of the product, extracting second feature information of the second visual data, or directly acquiring second feature information of the second visual data for displaying certain state or part of the product;
comparing the second feature information with the first feature information to determine whether the first visual data and the second visual data display the same state or part of the product, thereby querying a corresponding part in the product description, and returning a query result;
the visual data are pictures or videos and the visual data and the feature information have a one-to-one corresponding relation.

In the query method for the product description, the product description is at least one of a text, picture, audio format or video format.

In the query method for the product description, ways for directly acquiring the second visual data and second feature information comprise:
taking a picture of a certain state or part of the product or the second feature information;
acquiring a file containing the second visual data or second feature information.

In the query method for the product description, a way of directly acquiring the second visual data and the second feature information also comprises, selecting a portion containing the second visual data from the visual data of large size as the second visual data; or selecting a portion containing the second feature information from the visual data of large size as the second feature information.

In the query method for the product description, the product description, the first feature information and a corresponding relation thereof are stored in the same computer system, the second visual data and second feature information are acquired in the computer system, or the second feature information is directly acquired, and the second feature and the first feature information are compared in the computer system to query a corresponding part in the product description and return a query result.

The query method for the product description is realized based on the network, at all same, or partial same or all different network positions, the product description, the first feature information and a corresponding relation between the at least certain part in the product description and the first feature information are stored, the second visual data are acquired or the second feature information is directly acquired, the second feature information is extracted from the second visual data, and the second feature information and the first feature information are compared; different network positions perform communication connection by a network, and are used for transmitting the visual data, the feature information or a query result.

In the query method for the product description, the query result comprises certain part in the product description, or at least one of indication positions of certain part in the product description.

In the query method for the product description, a specific product description is assigned, and then in the assigned product description, a corresponding part therein is queried.

The query method for the product description also comprises, newly establishing first feature information of the first visual data of certain state or part of the product described by at least certain part in the product description, establishing a corresponding relation between the at least certain part in the product description and the first feature information, and storing the at least certain part in the product description, the first feature information and a corresponding relation therebetween.

The query method for the product description also comprises, newly establishing at least certain part in the product description, establishing a corresponding relation between the at least certain part in the product description and the first feature information of the first visual data for displaying certain state or part of the described product, and storing the at least certain part in the product description, the first feature information and a corresponding relation therebetween.

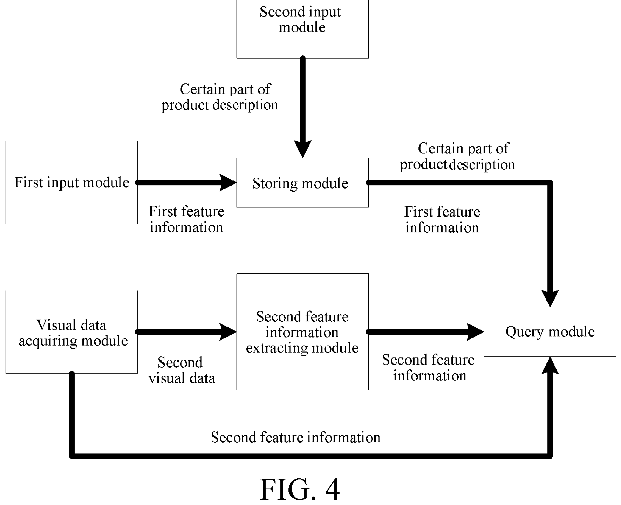

The invention also discloses a query apparatus for a product description for realizing above query method for the product description, as shown in FIG. 4, comprising:
a storing module, storing the product description, first feature information of first visual data for displaying certain state or part of a product described by at least certain part in the product description, and a corresponding relation between the at least certain part in the product description and the first feature information;
a visual data acquiring module, acquiring second visual data of certain state or part of the product or directly acquiring second feature information of second visual data of certain state or part of the product;
a second feature information extracting module, extracting second feature information from the second visual data;
a query module, comparing the second feature information with the first feature information to determine whether the first visual data and the second visual data display the same state or part of the product, thereby querying a corresponding part in the product description, and returning a query result;
the visual data are pictures or videos and the visual data and the feature information have a one-to-one corresponding relation.

In the query apparatus for the product description, the product description is at least one of a text, picture, audio format or video format.

In the query apparatus for the product description, the visual data acquiring module comprises a picture taking apparatus, for taking a picture of a certain state or certain part of a product or second feature information, to acquire the second visual data or directly acquire the second feature information.

The query apparatus for the product description also comprises a visual data processing module, selecting a portion containing the second visual data from the visual data of large size as the second visual data; or selecting a portion containing the second feature information from the visual data of large size as the second feature information.

In the query apparatus for the product description, the query result comprises certain part in the product description or at least one of position indications of certain part in the product description.

The query apparatus for the product description also comprises a first input module, inputting and displaying first feature information of the first visual data of certain state or part of a product described by at least certain part in the product description, establishing a corresponding relation between the at least certain part in the product description and the first feature information, and storing the at least certain part in the product description, the first feature information and a corresponding relation therebetween in the storing module.

The query apparatus for the product description also comprises a second input module, inputting at least certain part in the product description, establishing a corresponding relation between the at least certain part in the product description and first feature information of the first visual data for displaying certain state or part of a described product, and storing the at least certain part in the product description, the first feature information and a corresponding relation therebetween in the storing module.

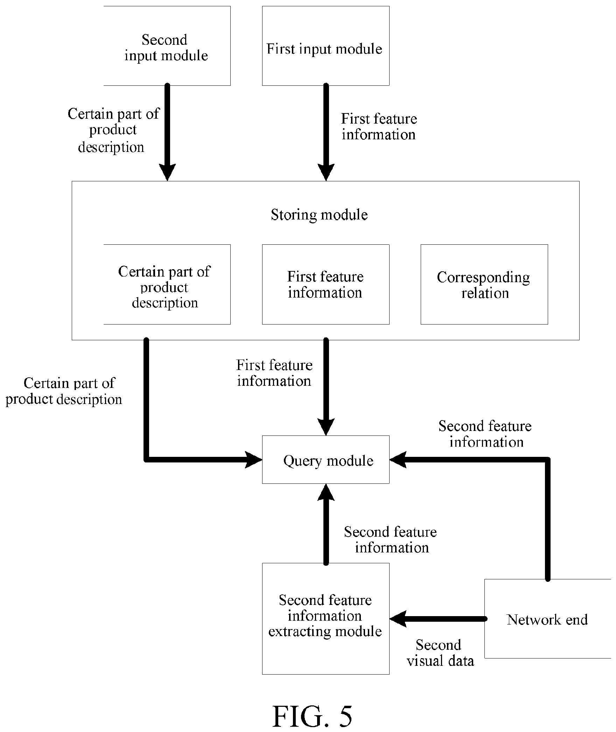

The invention further discloses a query system for a product description for realizing above query method for the product description, as shown in FIG. 5, the query system comprises one network device or a plurality of network devices interconnected by a network, and also comprises:
a storing module, for storing the product description, first feature information of first visual data for displaying certain state or part of a product described in at least certain part in the product description and a corresponding relation between the first feature information and at least certain part in the product description on at least one network device;
the visual data are pictures or videos, the visual data and the feature information have a one-to-one corresponding relation, and the network device comprises a network server and a client end.

The query system for the product description also comprises a query module for comparing the second feature information with the first feature information to determine whether the first visual data and the second visual data display the same state or part of the product, thereby querying a corresponding part in the product description, and returning a query result; the second feature information is sent from a network, or the second visual data are sent from the network, and the second feature information is extracted from the second visual data by a second feature information extracting module.

In the query system for the product description, the product description is at least one of a text, picture, audio format or video format.

In the query system for the product description, the query result comprises certain part in the product description or at least one of position indications of certain part in the product description.

The query system for the product description also comprises a first input module, inputting and displaying first feature information of first visual data of certain state or part of a product described by at least certain part in the product description, establishing a corresponding relation between the at least certain part in the product description and the first feature information, and storing the at least certain part in the product description, the first feature information and a corresponding relation therebetween in the storing module.

The query system for the product description also comprises a second input module, inputting at least certain part in the product description, establishing a corresponding relation between the at least certain part in the product description and first feature information of the first visual data for displaying certain state or part of a described product, and storing the at least certain part in the product description, the first feature information and a corresponding relation therebetween in the storing module.

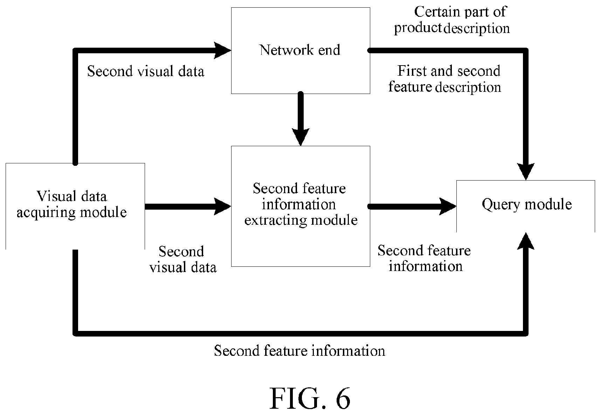

The invention further discloses a query client end for a product description for realizing above query method for the product description, as shown in FIG. 6, comprising:
a visual data acquiring module, acquiring second visual data of certain state or part of the product or directly acquiring second feature information of second visual data of certain state or part of the product;
through a network, based on the second visual data or second feature information, certain part of the product description is queried, and certain part of the product description describes certain state or part of the product displayed by the second visual data;
the visual data are pictures or videos and the visual data and the feature information have a one-to-one corresponding relation.

The query client end for the product description also comprises a second feature information extracting module, extracting the second feature information from the second visual data.

The query client end for the product description also comprises a query module for comparing the second feature information with the first feature information to determine whether the first visual data and the second visual data display the same state or part of the product, thereby querying a corresponding part in the product description, and returning a query result.

In the query client end for the product description, the query result comprises certain part in the product description or at least one of position indications of certain part in the product description.

In the query client end for the product description, the product description is at least one of a text, picture, audio format or video format.

In the query client end for the product description, the visual data acquiring module comprises a picture taking apparatus, for taking a picture of a certain state or certain part of a product or second feature information, to acquire the second visual data or directly acquire the second feature information.

The query client end for the product description also comprises a visual data processing module, selecting a portion containing the second visual data from the visual data of large size as the second visual data; or selecting a portion containing the second feature information from the visual data of large size as the second feature information.

The query client end for the product description also comprises a first input module, inputting and displaying first feature information of first visual data of certain state or part of a product described by at least certain part in the product description, establishing a corresponding relation between the at least certain part in the product description and the first feature information, and locally storing or uploading the at least certain part in the product description, the first feature information and a corresponding relation therebetween through a network.

The query client end for the product description also comprises a second input module, inputting at least certain part in the product description, establishing a corresponding relation between the at least certain part in the product description and first feature information of the first visual data for displaying certain state or part of a described product, and locally storing or uploading the at least certain part in the product description, the first feature information and a corresponding relation therebetween through a network.

By adopting a query method, apparatus system and client end for a product description, a user can acquire a local picture or video by taking a picture or other ways, the picture or video is subject to feature information extracting, meanwhile, a prestored picture or video corresponding to certain part of the description is subject to feature information extracting, or prestored feature information is directly called to compare with the feature information acquired by the user, thus querying a specific part in the product description.

Through above technical solutions of the invention, the user can query to obtain a corresponding product description by using a picture or video of certain state or part of a product, thus greatly improving the query efficiency on content of the description and facilitating the user to acquire information valuable for the user on the product description.

## Claims

1. An image-based query information query method for a product description, comprising either:
- establishing a correspondence relationship between at least a certain part in the product description and first visual data for displaying a certain state or part of a described product, and storing the at least a certain part in the product description, the first visual data and the correspondence relationship therebetween; and extracting first feature information from the first visual data; or
- establishing a correspondence relationship between at least certain part in the product description and first feature information of first visual data for displaying certain state or part of a described product, and storing the at least certain part, the first feature information and the correspondence relationship therebetween;
said method further comprising:
acquiring second visual data for displaying a certain state or part of the product, extracting second feature information from the second visual data, or directly acquiring second feature information from the second visual data for displaying the certain state or part of the product, the second feature information being extracted from a barcode or directly acquired from a text label, wherein the barcode or text label are adhered to the specific part of the product;
comparing the second feature information with the first feature information to determine whether the first visual data and the second visual data display the same state or part of the product, thereby querying a corresponding part in the product description, and returning a query result;
wherein the visual data are pictures or videos and the visual data and the feature information have a one-to-one correspondence relationship,
wherein the product description is at least one of a text, picture, audio format or video format.

2. The query method according to claim 1, wherein ways for directly acquiring the second visual data and second feature information comprise:
taking a picture of a certain state or part of the product or the second feature information;
acquiring a file containing the second visual data or second feature information,
wherein a way of directly acquiring the second visual data and the second feature information also comprises: selecting a portion containing the second visual data from the visual data of large size as the second visual data; or selecting a portion containing the second feature information from the visual data of large size as the second feature information.

3. The query method according to claim 1, wherein either:
- the product description, first visual data and a correspondence relationship thereof are stored in the same computer system, and first feature information is extracted in the computer system, or
- the product description, the first feature information and a correspondence relationship thereof are stored in a same computer system;
and wherein the second visual data and second feature information are acquired in the computer system, or the second feature information is directly acquired, and the second feature and the first feature information are compared in the computer system to query a corresponding part in the product description and return a query result.

4. The query method according to claim 1, wherein the query method for the product description is realized on a network basis at network positions that are all identical, or partially identical or entirely different, by:
- storing the product description;
- either:
• storing the first visual data and a correspondence relationship between at least a certain part in the product description and the first visual data; and
• extracting the first feature information;
or
• storing the first feature information and a correspondence relationship between the at least certain part in the product description and the first feature information;
said method further comprising:
- acquiring the second visual data or directly acquiring the second feature information;
- extracting the second feature information from the second visual data;
- comparing the second feature information with the first feature information;
wherein the network positions are communicatively connected via a network, and are used for transmitting the visual data, the feature information or a query result.

5. The query method according to claim 1, wherein the query result comprises a certain part in the product description, or at least one of position indications of a certain part in the product description.

6. The query method according to claim 1, wherein a product description is assigned, and then in the assigned product description, a corresponding part therein is queried.

7. The query method according to claim 1, also comprising: newly establishing first visual data or the first feature information thereof of certain state or part of the product described by at least certain part in the product description, establishing a correspondence relationship between the at least certain part in the product description and the first visual data or the first feature information thereof, and storing the at least certain part in the product description, the first visual data and a correspondence relationship therebetween.

8. The query method according to claim 1, also comprising: newly establishing at least certain part in the product description, establishing a correspondence relationship between the at least certain part in the product description and the first visual data or the first feature information thereof for displaying certain state or part of the described product, and storing the at least certain part in the product description, the first visual data or the first feature information thereof and a correspondence relationship therebetween.

9. An image-based query information query apparatus comprising:
a storing module adapted for storing the product description, first visual data or the first feature information thereof for displaying certain state or part of a product described by at least certain part in the product description, and a correspondence relationship between the at least certain part in the product description and the first visual data or the first feature information thereof;
a visual data acquiring module adapted for acquiring second visual data of certain state or part of the product or directly acquiring second feature information of second visual data of certain state or part of the product;
said apparatus comprising either:
- a feature information extracting module, adapted for extracting first feature information from the first visual data and second feature information from the second visual data; or
- a second feature information extracting module adapted for extracting second feature information from the second visual data, wherein the second feature information being extracted from a barcode or directly acquired from a text label, wherein the barcode or text label are adhered to the specific part of the product;
said apparatus further comprising:
a query module adapted for comparing the second feature information with the first feature information to determine whether the first visual data and the second visual data display the same state or part of the product, thereby querying a corresponding part in the product description, and returning a query result;
wherein the visual data are pictures or videos and the visual data and the feature information have a one-to-one correspondence relationship,
preferably wherein the product description is at least one of a text, picture, audio format or video format.

10. The query apparatus according to claim 9, wherein the visual data acquiring module comprises a picture taking apparatus, for taking a picture of a certain state or certain part of a product or second feature information, to acquire the second visual data or directly acquire the second feature information,
wherein said query apparatus also comprises a visual data processing module adapted for selecting a portion containing the second visual data from the visual data of large size as the second visual data; or for selecting a portion containing the second feature information from the visual data of large size as the second feature information.

11. The query apparatus according to claim 9, wherein, the query result comprises certain part in the product description or at least one of position indications of certain part in the product description.

12. The query apparatus according to claim 9, also comprising a first input module adapted for inputting and displaying first visual data or the first feature information thereof of certain state or part of a product described by at least certain part in the product description, establishing a correspondence relationship between the at least certain part in the product description and the first visual data or the first feature information thereof, and storing the at least certain part in the product description, the first visual data or the first feature information thereof and a correspondence relationship therebetween in the storing module.

13. The query apparatus according to claim 9, also comprising a second input module adapted for inputting at least certain part in the product description, establishing a correspondence relationship between the at least certain part in the product description and the first visual data or the first feature information thereof for displaying certain state or part of a described product, and storing the at least certain part in the product description, the first visual data or the first feature information thereof and a correspondence relationship therebetween in the storing module.

14. An image-based query information query system for a product description, comprising one network device or a plurality of network devices interconnected by a network, each device being an apparatus according to claim 9, and also comprising:
a storing module adapted for storing the product description, first visual data or first feature information thereof for displaying certain state or part of a product described in at least certain part in the product description and a correspondence relationship between the first visual data or the first feature information thereof and at least certain part in the product description on at least one network device;
wherein the visual data are pictures or videos, the visual data and the feature information have a one-to-one correspondence relationship, and the network device comprises a network server and a client end,
wherein the product description is at least one of a text, picture, audio format or video format.

15. The query system according to claim 14, wherein the network device also comprises a first feature information extracting module adapted for extracting first feature information from the first visual data,
wherein said query system also comprises a query module for comparing the second feature information with the first feature information to determine whether the first visual data and the second visual data display the same state or part of the product, thereby querying a corresponding part in the product description, and returning a query result; the second feature information is sent from a network, or the second visual data are sent from the network, and the second feature information is extracted from the second visual data by a second feature information extracting module.

16. The query system according to claim 14, wherein the query result comprises certain part in the product description or at least one of position indications of certain part in the product description.

17. The query system according to claim 14, also comprising a first input module adapted for inputting and displaying first visual data or the first feature information thereof of certain state or part of a product described by at least certain part in the product description, establishing a correspondence relationship between the at least certain part in the product description and the first visual data or the first feature information thereof, and storing the at least certain part in the product description, the first visual data or the first feature information thereof and a correspondence relationship therebetween in the storing module.

18. The query system according to claim 14, also comprising a second input module adapted for inputting at least certain part in the product description, establishing a correspondence relationship between the at least certain part in the product description and the first visual data or the first feature information thereof for displaying certain state or part of a described product, and storing the at least certain part in the product description, the first visual data or the first feature information thereof and a correspondence relationship therebetween in the storing module.

19. An image-based query information query client device for a product description, comprising:
a visual data acquiring module adapted for acquiring second visual data of certain state or part of the product or directly acquiring second feature information of second visual data of certain state or part of the product;
wherein through a network, based on the second visual data or second feature information, the certain part of the product description is queried, and the certain part of the product description describes certain state or part of the product displayed by the second visual data;
wherein the visual data are pictures or videos and the visual data and the feature information have a one-to-one correspondence relationship,
wherein said query client end also comprises a second feature information extracting module adapted for extracting the second feature information from the second visual data, wherein the second feature information being extracted from a barcode or directly acquired from a text label, wherein the barcode or text label are adhered to the specific part of the product,
wherein the product description is at least one of a text, picture, audio format or video format.

20. The query client end according to claim 19, also comprising a first feature information extracting module, wherein the first visual data are downloaded from the network, and the first feature information is extracted from the first visual data by the first feature information extracting module,
wherein, the first feature information extracting module and the second feature information extracting module are the same module.

21. The query client end according to claim 20, also comprising a query module for comparing the second feature information with the first feature information to determine whether the first visual data and the second visual data display the same state or part of the product, thereby querying a corresponding part in the product description, and returning a query result,
wherein the query result comprises certain part in the product description or at least one of position indications of certain part in the product description.

22. The query client end according to claim 19, wherein, the visual data acquiring module comprises a picture taking apparatus, for taking a picture of a certain state or certain part of a product or second feature information, to acquire the second visual data or directly acquire the second feature information.

23. The query client end according to claim 19, also comprising a visual data processing module, selecting a portion containing the second visual data from the visual data of large size as the second visual data; or selecting a portion containing the second feature information from the visual data of large size as the second feature information.

24. The query client end according to claim 19, also comprising a first input module adapted for inputting and displaying first visual data or the first feature information thereof of certain state or part of a product described by at least certain part in the product description, establishing a correspondence relationship between the at least certain part in the product description and the first visual data or the first feature information thereof, and locally storing or uploading the at least certain part in the product description, the first visual data or the first feature information thereof and a correspondence relationship therebetween through a network.

25. The query client end according to claim 19, also comprising a second input module adapted for inputting at least certain part in the product description, establishing a correspondence relationship between the at least certain part in the product description and the first visual data or the first feature information thereof for displaying certain state or part of a described product, and locally storing or uploading the at least certain part in the product description, the first visual data or the first feature information thereof and a correspondence relationship therebetween through a network.

## Patentansprüche

1. Bildbasiertes Abfrageinformations-Abfrageverfahren für eine Produktbeschreibung, umfassend entweder:
- Herstellen einer Korrespondenzbeziehung zwischen mindestens einem bestimmten Teil in der Produktbeschreibung und ersten visuellen Daten zum Anzeigen eines bestimmten Zustands oder Teils eines beschriebenen Produkts, und Speichern des mindestens bestimmten Teils, der ersten visuellen Daten und der Korrespondenzbeziehung dazwischen in der Produktbeschreibung; und Extrahieren von ersten Merkmalsinformationen aus den ersten visuellen Daten; oder
- Herstellen einer Korrespondenzbeziehung zwischen mindestens einem bestimmten Teil in der Produktbeschreibung und ersten Merkmalinformationen der ersten visuellen Daten zum Anzeigen eines bestimmten Zustands oder Teils eines beschriebenen Produkts, und Speichern des mindestens bestimmten Teils, der ersten Merkmalinformationen und der Korrespondenzbeziehung dazwischen;
wobei das Verfahren ferner umfasst:
Erfassen von zweiten visuellen Daten zum Anzeigen eines bestimmten Zustands oder Teils des Produkts, Extrahieren von zweiten Merkmalsinformationen aus den zweiten visuellen Daten, oder direktes Erfassen von zweiten Merkmalsinformationen aus den zweiten visuellen Daten zum Anzeigen des bestimmten Zustands oder Teils des Produkts, wobei die zweiten Merkmalsinformationen aus einem Barcode extrahiert oder direkt von einer Textbeschriftung erfasst werden, wobei der Barcode oder die Textbeschriftung auf dem spezifischen Teil des Produkts angebracht sind;
Vergleichen der zweiten Merkmalsinformationen mit den ersten Merkmalsinformationen, um zu bestimmen, ob die ersten visuellen Daten und die zweiten visuellen Daten den gleichen Zustand oder Teil des Produkts anzeigen, wodurch ein entsprechender Teil in der Produktbeschreibung abgefragt wird, und Zurückgeben eines Abfrageergebnisses;
wobei die visuellen Daten Bilder oder Videos sind und die visuellen Daten und die Merkmalsinformationen eine Eins-zu-Eins-Korrespondenzbeziehung haben,
wobei die Produktbeschreibung mindestens eines von einem Text-, Bild-, Audioformat oder Videoformat ist.

2. Abfrageverfahren nach Anspruch 1, wobei Art und Weisen zum direkten Erfassen der zweiten visuellen Daten und der zweiten Merkmalsinformationen umfassen:
Aufnehmen eines Bildes eines bestimmten Zustands oder Teils des Produkts oder der zweiten Merkmalsinformation;
Erfassen einer Datei, die die zweiten visuellen Daten oder zweiten Merkmalsinformationen enthält;
wobei eine Art und Weise zum direkten Erfassen der zweiten visuellen Daten und der zweiten Merkmalsinformationen auch umfasst: Auswählen eines Teils, der die zweiten visuellen Daten enthält, aus den visuellen Daten großer Größe als die zweiten visuelle Daten; oder Auswählen eines Teils, der die zweiten Merkmalsinformationen enthält, aus den visuellen Daten großer Größe als die zweiten Merkmalsinformationen.

3. Abfrageverfahren nach Anspruch 1, wobei entweder:
- die Produktbeschreibung, die ersten visuellen Daten und eine Korrespondenzbeziehung davon auf demselben Computersystem gespeichert werden, und die ersten Merkmalsinformationen in dem Computersystem extrahiert werden, oder
- die Produktbeschreibung, die ersten Merkmalsinformationen und eine Korrespondenzbeziehung davon auf demselben Computersystem gespeichert werden;
und wobei die zweiten visuellen Daten und die zweiten Merkmalsinformationen in dem Computersystem erfasst werden, oder die zweiten Merkmalsinformationen direkt erfasst werden, und die zweiten und die ersten Merkmalsinformationen in dem Computersystem verglichen werden, um einen entsprechenden Teil in der Produktbeschreibung abzufragen und ein Abfrageergebnis zurückgeben.

4. Abfrageverfahren nach Anspruch 1, wobei das Abfrageverfahren für die Produktbeschreibung auf Netzwerkbasis an Netzwerkpositionen, die alle identisch oder teilweise identisch oder vollständig unterschiedlich sind, realisiert wird durch:
- Speichern der Produktbeschreibung;
- entweder:
• Speichern der ersten visuellen Daten und einer Korrespondenzbeziehung zwischen mindestens einem bestimmten Teil in der Produktbeschreibung und den ersten visuellen Daten; und
• Extrahieren der ersten Merkmalsinformationen; oder
• Speichern der ersten Merkmalsinformationen und einer Korrespondenzbeziehung zwischen dem mindestens bestimmten Teil in der Produktbeschreibung und den ersten Merkmalsinformationen;
wobei das Verfahren ferner umfasst:
- Erfassen der zweiten visuellen Daten oder direktes Erfassen der zweiten Merkmalsinformationen;
- Extrahieren der zweiten Merkmalsinformationen aus den zweiten visuellen Daten;
- Vergleichen der zweiten Merkmalsinformationen mit den ersten Merkmalsinformationen;
wobei die Netzwerkpositionen über ein Netzwerk kommunikativ verbunden sind, und zum Übertragen der visuellen Daten, der Merkmalsinformationen oder eines Abfrageergebnisses verwendet werden.

5. Abfrageverfahren nach Anspruch 1, wobei das Abfrageergebnis einen bestimmten Teil in der Produktbeschreibung oder mindestens eine von Positionsangaben eines bestimmten Teils in der Produktbeschreibung umfasst.

6. Abfrageverfahren nach Anspruch 1, wobei eine Produktbeschreibung zugewiesen wird, und dann, in der zugewiesenen Produktbeschreibung, ein entsprechender Teil darin abgefragt wird.

7. Abfrageverfahren nach Anspruch 1, auch umfassend: Neuerstellen der ersten visuellen Daten, oder der ersten Merkmalsinformationen davon, eines bestimmten Zustands oder Teils des Produkts, der durch den mindestens bestimmten Teil in der Produktbeschreibung beschrieben wird, Herstellen einer Korrespondenzbeziehung zwischen dem mindestens bestimmten Teil in der Produktbeschreibung und den ersten visuellen Daten, oder den ersten Merkmalsinformationen davon, und Speichern des mindestens bestimmten Teils in der Produktbeschreibung, der ersten visuellen Daten und einer Korrespondenzbeziehung dazwischen.

8. Abfrageverfahren nach Anspruch 1, auch umfassend: Neuerstellen mindestens eines bestimmten Teils in der Produktbeschreibung, Herstellen einer Korrespondenzbeziehung zwischen dem mindestens bestimmten Teil in der Produktbeschreibung und den ersten visuellen Daten, oder den ersten Merkmalsinformationen davon, zum Anzeigen eines bestimmten Zustands oder Teils des beschriebenen Produkts, und Speichern des mindestens bestimmten Teils in der Produktbeschreibung, der ersten visuellen Daten, oder der ersten Merkmalsinformationen davon, und einer Korrespondenzbeziehung dazwischen.

9. Bildbasierte Abfrageinformations-Abfragevorrichtung, umfassend:
ein Speichermodul, das dazu ausgelegt ist, die Produktbeschreibung, die ersten visuellen Daten, oder die ersten Merkmalsinformationen davon, zum Anzeigen eines bestimmten Zustands oder eines Teils eines Produkts, der durch mindestens bestimmten Teil in der Produktbeschreibung beschrieben ist, und eine Korrespondenzbeziehung zwischen dem mindestens bestimmten Teil der Produktbeschreibung und den ersten visuellen Daten, oder den ersten Merkmalsinformationen davon, zu speichern;
ein visuelles Datenerfassungsmodul, das dazu ausgelegt ist, zweite visuelle Daten eines bestimmten Zustands oder Teils des Produkts zu erfassen, oder direkt zweite Merkmalsinformationen von visuellen Daten eines bestimmten Zustands oder Teils des Produkts zu erfassen;
wobei die Vorrichtung entweder umfasst:
- ein Merkmalsinformations-Extraktionsmodul, das dazu ausgelegt ist, erste Merkmalsinformationen aus den ersten visuellen Daten und zweite Merkmalinformationen aus den zweiten visuellen Daten zu extrahieren; oder
- ein zweites Merkmalsinformations-Extraktionsmodul, das dazu ausgelegt ist, zweite Merkmalsinformationen aus den zweiten visuellen Daten zu extrahieren, wobei die zweiten Merkmalsinformationen aus einem Barcode extrahiert oder direkt von einer Textbeschriftung erfasst werden, wobei der Barcode oder die Textbeschriftung an dem spezifischen Teil des Produktes angebracht sind;
wobei die Vorrichtung ferner umfasst:
ein Abfragemodul, das dazu ausgelegt ist, die zweiten Merkmalsinformationen mit den ersten Merkmalsinformationen zu vergleichen, um zu bestimmen, ob die ersten visuellen Daten und die zweiten visuellen Daten den gleichen Zustand oder Teil des Produkts anzeigen, wodurch ein entsprechender Teil in der Produktbeschreibung abgefragt wird, und ein Abfrageergebnis zurückzugeben;
wobei die visuellen Daten Bilder oder Videos sind und die visuellen Daten und die Merkmalsinformationen eine Eins-zu-Eins-Korrespondenzbeziehung aufweisen,
wobei vorzugsweise die Produktbeschreibung mindestens eines von einem Text-, Bild-, Audioformat oder Videoformat ist.

10. Abfragevorrichtung nach Anspruch 9, wobei das visuelle Datenerfassungsmodul eine Bildaufnahmevorrichtung umfasst, zum Aufnehmen eines Bildes eines bestimmten Zustands oder eines bestimmten Teils eines Produkts oder von zweiten Merkmalsinformation, um die zweiten visuellen Daten zu erfassen oder die zweiten Merkmalsinformationen direkt zu erfassen,
wobei die Abfragevorrichtung auch ein visuelles Datenverarbeitungsmodul umfasst, das dazu ausgelegt ist, einen Teil, der die zweiten visuellen Daten enthält, aus den visuellen Daten großer Größe als zweite visuelle Daten auszuwählen; oder einen Teil, der die zweiten Merkmalsinformationen enthält, aus den visuellen Daten großer Größe als die zweiten Merkmalsinformationen auszuwählen.

11. Abfragevorrichtung nach Anspruch 9, wobei das Abfrageergebnis einen bestimmten Teil in der Produktbeschreibung oder mindestens eine von Positionsangaben eines bestimmten Teils in der Produktbeschreibung umfasst.

12. Abfragevorrichtung nach Anspruch 9, auch umfassend ein erstes Eingabemodul, das ausgelegt ist zum Eingeben und Anzeigen von ersten visuellen Daten, oder den ersten Merkmalsinformationen davon, eines bestimmten Zustands oder Teils eines Produkts, das durch mindestens einen bestimmten Teil in der Produktbeschreibung beschrieben ist, Herstellen einer Korrespondenzbeziehung zwischen dem mindestens bestimmten Teil in der Produktbeschreibung und den ersten visuellen Daten, oder den ersten Merkmalsinformationen davon, und Speichern des mindestens bestimmten Teils in der Produktbeschreibung, der ersten visuellen Daten, oder der ersten Merkmalsinformationen davon, und einer Korrespondenzbeziehung dazwischen in dem Speichermodul.

13. Abfragevorrichtung nach Anspruch 9, auch umfassend ein zweites Eingabemodul, das ausgelegt ist zum Eingeben mindestens eines bestimmten Teils in der Produktbeschreibung, Herstellen einer Korrespondenzbeziehung zwischen dem mindestens bestimmten Teil in der Produktbeschreibung und den ersten visuellen Daten oder den ersten Merkmalsinformationen davon, zum Anzeigen eines bestimmten Zustands oder Teils eines beschriebenen Produkts, und Speichern des mindestens bestimmten Teils in der Produktbeschreibung, der ersten visuellen Daten, oder der ersten Merkmalsinformationen davon, und einer Korrespondenzbeziehung dazwischen in dem Speichermodul.

14. Bildbasiertes Abfrageinformations-Abfragesystem für eine Produktbeschreibung, umfassend ein Netzwerkgerät oder mehrere Netzwerkgeräte, die durch ein Netzwerk miteinander verbunden sind, wobei jedes Gerät eine Vorrichtung nach Anspruch 9 ist, und auch umfassend:
ein Speichermodul, das dazu ausgelegt ist, die Produktbeschreibung, die ersten visuellen Daten, oder ersten Merkmalsinformationen davon, zum Anzeigen eines bestimmten Zustands oder eines Teils eines Produkts, der in mindestens einem bestimmten Teil der Produktbeschreibung beschrieben ist, und eine Korrespondenzbeziehung zwischen den ersten visuellen Daten, oder den ersten Merkmalsinformationen davon, und mindestens einem bestimmten Teil der Produktbeschreibung auf mindestens einem Netzwerkgerät zu speichern;
wobei die visuellen Daten Bilder oder Videos sind, die visuellen Daten und die Merkmalsinformationen eine Eins-zu-Eins-Korrespondenzbeziehung aufweisen, und das Netzwerkgerät einen Netzwerkserver und ein Client-Ende umfasst;
wobei die Produktbeschreibung mindestens ein Text-, Bild-, Audioformat oder Videoformat ist.

15. Abfragesystem nach Anspruch 14, wobei das Netzwerkgerät auch ein erstes Merkmalinformations-Extraktionsmodul umfasst, das dazu ausgelegt ist, erste Merkmalsinformationen aus den ersten visuellen Daten zu extrahieren,
wobei das Abfragesystem auch ein Abfragemodul zum Vergleichen der zweiten Merkmalsinformationen mit den ersten Merkmalsinformationen umfasst, um zu bestimmen, ob die ersten visuellen Daten und die zweiten visuellen Daten den gleichen Zustand oder Teil des Produkts anzeigen, wodurch ein entsprechender Teil in der Produktbeschreibung abgefragt wird, und ein Abfrageergebnis zurückzugegeben; wobei die zweiten Merkmalsinformationen von einem Netzwerk gesendet worden sind, oder die zweiten visuellen Daten von dem Netzwerk gesendet worden sind, und die zweiten Merkmalsinformationen durch ein zweites Merkmalinformations-Extraktionsmodul aus den zweiten visuellen Daten extrahiert werden.

16. Abfragesystem nach Anspruch 14, wobei das Abfrageergebnis einen bestimmten Teil in der Produktbeschreibung oder mindestens eine von Positionsangaben eines bestimmten Teils in der Produktbeschreibung umfasst.

17. Abfragesystem nach Anspruch 14, auch umfassend ein erstes Eingabemodul, das ausgelegt ist zum Eingeben und Anzeigen der ersten visuellen Daten, oder die ersten Merkmalsinformationen davon, eines bestimmten Zustands oder Teils eines Produkts, das durch mindestens bestimmten Teil in der Produktbeschreibung beschrieben ist, Herstellen einer Korrespondenzbeziehung zwischen dem mindestens bestimmten Teil in der Produktbeschreibung und den ersten visuellen Daten, oder den ersten Merkmalsinformationen davon, und Speichern des mindestens bestimmten Teils in der Produktbeschreibung, der ersten visuellen Daten, oder der ersten Merkmalsinformationen davon, und einer Korrespondenzbeziehung dazwischen in dem Speichermodul.

18. Abfragesystem nach Anspruch 14, auch umfassend ein zweites Eingabemodul, das ausgelegt ist zum Einzugeben mindestens eines bestimmten Teils in der Produktbeschreibung, Herstellen einer Korrespondenzbeziehung zwischen dem mindestens bestimmten Teil in der Produktbeschreibung und den ersten visuellen Daten, oder den ersten Merkmalsinformationen davon, zum Anzeigen eines bestimmten Zustands oder Teils eines beschriebenen Produkts, und Speichern des mindestens bestimmten Teils in der Produktbeschreibung, der ersten visuellen Daten, oder der ersten Merkmalsinformationen davon, und einer Korrespondenzbeziehung zwischen diesen in dem Speichermodul.

19. Clientgerät für eine bildbasierte Abfrageinformationsabfrage für eine Produktbeschreibung, umfassend:
ein visuelles Datenerfassungsmodul, das dazu ausgelegt ist, zweite visuelle Daten eines bestimmten Zustands oder Teils des Produkts zu erfassen, oder zweite Merkmalsinformationen von zweiten visuellen Daten eines bestimmten Zustands oder Teils des Produkts direkt zu erfassen;
wobei, durch ein Netzwerk, basierend auf den zweiten visuellen Daten oder zweiten Merkmalsinformationen der bestimmte Teil der Produktbeschreibung abgefragt wird, und der bestimmte Teil der Produktbeschreibung einen bestimmten Zustand oder Teil des Produkts, der durch die zweiten visuellen Daten angezeigt wird, beschreibt;
wobei die visuellen Daten Bilder oder Videos sind und die visuellen Daten und die Merkmalsinformationen eine Eins-zu-Eins-Korrespondenzbeziehung aufweisen,
wobei der Abfrageclient auch ein zweites Modul zum Extrahieren von Merkmalsinformationen umfasst, das dazu ausgelegt ist, die zweiten Merkmalsinformationen aus den zweiten visuellen Daten zu extrahieren, wobei die zweiten Merkmalsinformationen aus einem Barcode extrahiert oder direkt von einer Textbeschriftung erfasst werden, wobei der Barcode oder die Textbeschriftung an den spezifischen Teil des Produkts angebracht sind,
wobei die Produktbeschreibung mindestens eines von einem Text-, Bild-, Audioformat oder Videoformat ist.

20. Abfrageclient nach Anspruch 19, auch umfassend ein erstes Merkmalsinformations-Extraktionsmodul, wobei die ersten visuellen Daten aus dem Netzwerk heruntergeladen werden, und die ersten Merkmalsinformationen durch das erste Merkmalsinformations-Extraktionsmodul aus den ersten visuellen Daten extrahiert werden,
wobei das erste Merkmalsinformations-Extraktionsmodul und das zweite Merkmalsinformations-Extraktionsmodul das gleiche Modul sind.

21. Abfrageclient nach Anspruch 20, auch umfassend ein Abfragemodul zum Vergleichen der zweiten Merkmalsinformationen mit den ersten Merkmalsinformationen, um zu bestimmen, ob die ersten visuellen Daten und die zweiten visuellen Daten den gleichen Zustand oder Teil des Produkts anzeigen, wodurch ein entsprechendes Teil in der Produktbeschreibung abgefragt wird, und Zurückgeben eines Abfrageergebnis,
wobei das Abfrageergebnis einen bestimmten Teil in der Produktbeschreibung oder mindestens ein von Positionsangaben eines bestimmten Teils in der Produktbeschreibung umfasst.

22. Abfrageclient nach Anspruch 19, wobei das visuelle Datenerfassungsmodul eine Bildaufnahmevorrichtung umfasst, zum Aufnehmen eines Bildes eines bestimmten Zustands oder eines bestimmten Teils eines Produkts oder von zweiten Merkmalsinformationen, um die zweiten visuellen Daten zu erfassen, oder die zweiten Merkmalsinformationen direkt zu erfassen.

23. Abfrageclient nach Anspruch 19, auch umfassend ein visuelles Datenverarbeitungsmodul, das einen Teil, der die zweiten visuellen Daten enthält, aus den visuellen Daten großer Größe als die zweiten visuellen Daten auswählt; oder einen Teil, der die zweiten Merkmalsinformationen enthält, aus den visuellen Daten großer Größe als die zweiten Merkmalsinformationen auswählt.

24. Abfrageclient nach Anspruch 19, auch umfassend ein erstes Eingabemodul, das ausgelegt ist zum Eingeben und Anzeigen der ersten visuellen Daten, oder der ersten Merkmalsinformationen davon, eines bestimmten Zustands oder Teils eines Produkts, das durch mindestens einen bestimmten Teil in der Produktbeschreibung beschrieben wird, Herstellen einer Korrespondenzbeziehung zwischen dem mindestens bestimmten Teil in der Produktbeschreibung und den ersten visuellen Daten, oder den ersten Merkmalsinformationen davon, und lokales Speichern oder Hochladen des mindestens bestimmten Teils in der Produktbeschreibung, der ersten visuellen Daten, oder der ersten Merkmalsinformationen davon, und einer Korrespondenzbeziehung dazwischen über ein Netzwerk.

25. Abfrageclient nach Anspruch 19, auch umfassend ein zweites Eingabemodul, das ausgelegt ist zum Eingeben mindestens eines bestimmten Teils in der Produktbeschreibung, Herstellen einer Korrespondenzbeziehung zwischen dem mindestens bestimmten Teil in der Produktbeschreibung und den ersten visuellen Daten, oder den ersten Merkmalsinformationen davon, zum Anzeigen eines bestimmten Zustands oder Teils eines beschriebenen Produkts, und lokalem Speichern oder Hochladen des mindestens bestimmten Teils in der Produktbeschreibung, der ersten visuellen Daten, oder der ersten Merkmalsinformationen davon, und einer Korrespondenzbeziehung dazwischen über ein Netzwerk.

## Revendications

1. Procédé d'analyse d'informations d'analyse basée sur l'image pour une description de produit, comprenant soit :
- l'établissement d'une relation de correspondance entre au moins une certaine partie de la description de produit et des premières données visuelles pour afficher un certain état ou une certaine partie d'un produit décrit, et l'enregistrement d'au moins une certaine partie de la description de produit, les premières données visuelles et la relation de correspondance entre elles ; et l'extraction des premières informations caractéristiques à partir des premières données visuelles ; ou
- l'établissement d'une relation de correspondance entre au moins une certaine partie de la description de produit et des premières informations caractéristiques des premières données visuelles pour afficher un certain état ou une certaine partie d'un produit décrit, et l'enregistrement de la au moins certaine partie, des premières informations caractéristiques et de la relation de correspondance entre elles ;
ledit procédé comprenant, en outre :
l'acquisition de deuxièmes données visuelles pour afficher un certain état ou une certaine partie du produit, l'extraction des deuxièmes informations caractéristiques à partir des deuxièmes données visuelles, ou l'acquisition directement des deuxièmes informations caractéristiques à partir des deuxièmes données visuelles pour afficher le certain état ou la certaine partie du produit, les deuxièmes informations caractéristiques étant extraites d'un code-barres ou acquises directement d'un certain label de texte, dans lequel le code-barres ou le label de texte sont collés à la partie spécifique du produit ;
la comparaison des deuxièmes informations caractéristiques avec les premières informations caractéristiques pour déterminer si les premières données visuelles et les deuxièmes données visuelles affichent le même état ou la même partie de produit, en analysant de cette façon une partie correspondante dans la description de produit, et en renvoyant un résultat d'analyse ;
dans lequel les données visuelles sont des images ou des vidéos et les données visuelles et les informations caractéristiques ont une relation de correspondance une à une,
dans lequel la description de produit est au moins un d'un texte, d'une image, d'un format audio ou d'un format vidéo.

2. Procédé d'analyse selon la revendication 1, dans lequel des manières d'acquérir directement les deuxièmes données visuelles et les deuxièmes informations caractéristiques comprennent :
la prise de vue d'un certain état ou d'une certaine partie du produit ou les deuxièmes informations caractéristiques ;
l'acquisition d'un dossier contenant les deuxièmes données visuelles ou deuxièmes informations caractéristiques,
dans lequel une manière d'acquérir directement les deuxièmes données visuelles et les deuxièmes informations caractéristiques comprend également : la sélection d'une portion contenant les deuxièmes données visuelles à partir des données visuelles de grande taille comme deuxièmes données visuelles ; ou
la sélection d'une portion contenant les deuxièmes informations caractéristiques à partir des données visuelles de grande taille comme deuxièmes informations caractéristiques.

3. Procédé d'analyse selon la revendication 1, dans lequel soit :
- la description de produit, les premières données visuelles et une relation de correspondance de celles-ci sont enregistrées dans le même système informatique, et des premières informations caractéristiques sont extraites dans le système informatique, ou
- la description de produit, les premières informations caractéristiques et une relation de correspondance de celles-ci sont enregistrées dans un même système informatique ;
et dans lequel les deuxièmes données visuelles et les deuxièmes informations caractéristiques sont acquises dans le système informatique, ou les deuxièmes informations caractéristiques sont acquises directement, et les deuxièmes informations caractéristiques et les premières informations caractéristiques sont comparées dans le système informatique pour analyser une partie correspondante dans la description de produit et renvoyer un résultat d'analyse.

4. Procédé d'analyse selon la revendication 1, dans lequel le procédé d'analyse pour la description de produit est réalisé sur une base de réseau à des positions de réseau qui sont toutes identiques, ou partiellement identiques ou entièrement différentes, en :
- enregistrant la description de produit ;
- soit :
• en enregistrant les premières données visuelles et une relation de correspondance entre au moins une certaine partie dans la description de produit et les premières données visuelles ; et
• en extrayant les premières informations caractéristiques ;
soit
• en enregistrant les premières informations caractéristiques et une relation de correspondance entre la au moins certaine partie dans la description de produit et les premières informations caractéristiques ;
ledit procédé comprenant, en outre :
- l'acquisition des deuxièmes données visuelles ou l'acquisition directement des deuxièmes informations caractéristiques ;
- l'extraction des deuxièmes informations caractéristiques à partir des deuxièmes données visuelles ;
- la comparaison des deuxièmes informations caractéristiques avec les premières informations caractéristiques ;
dans lequel les positions de réseau sont connectées de façon communicative par l'intermédiaire d'un réseau, et sont utilisées pour transmettre les données visuelles, les informations caractéristiques ou un résultat d'analyse.

5. Procédé d'analyse selon la revendication 1, dans lequel le résultat d'analyse comprend une certaine partie dans la description de produit, ou au moins une des indications de position d'une certaine partie dans la description de produit.

6. Procédé d'analyse selon la revendication 1, dans lequel une description de produit est attribuée, et ensuite dans la description de produit attribuée, une partie correspondante y est analysée.

7. Procédé d'analyse selon la revendication 1, comprenant également : l'établissement de façon récente des premières données visuelles ou les premières informations caractéristiques de celles-ci d'un certain état ou d'une certaine partie du produit décrit par au moins une certaine partie dans la description de produit, l'établissement d'une relation de correspondance entre la au moins certaine partie dans la description de produit et les premières données visuelles ou les premières informations caractéristiques de celles-ci, et l'enregistrement de la au moins certaine partie dans la description de produit, des premières données visuelles et une relation de correspondance entre elles.

8. Procédé d'analyse selon la revendication 1, comprenant également : l'établissement de façon récente d'au moins une certaine partie dans la description de produit, l'établissement d'une relation de correspondance entre la au moins certaine partie dans la description de produit et les premières données visuelles ou les premières informations caractéristiques de celles-ci pour afficher un certain état ou une certaine partie du produit décrit, et l'enregistrement de la au moins certaine partie dans la description de produit, des premières données visuelles ou des premières informations caractéristiques de celles-ci et une relation de correspondance entre elles.

9. Appareil d'analyse d'informations d'analyse basée sur l'image comprenant :
un module d'enregistrement adapté pour enregistrer la description de produit, des premières données visuelles ou les premières informations caractéristiques de celles-ci pour afficher un certain état ou une certaine partie d'un produit décrit par au moins une certaine partie dans la description de produit, et une relation de correspondance entre la au moins certaine partie dans la description de produit et les premières données visuelles ou les premières informations caractéristiques de celles-ci ;
un module d'acquisition de données visuelles adapté pour acquérir des deuxièmes données visuelles d'un certain état ou d'une certaine partie du produit ou acquérir directement des deuxièmes informations caractéristiques des deuxièmes données visuelles d'un certain état ou d'une certaine partie du produit ;
ledit appareil comprenant soit :
- un module d'extraction d'informations caractéristiques, adapté pour extraire des premières informations caractéristiques des premières données visuelles et des deuxièmes informations caractéristiques des deuxièmes données visuelles ; ou
- un module d'extraction de deuxièmes informations caractéristiques adapté pour extraire des deuxièmes informations caractéristiques des deuxièmes données visuelles, dans lequel les deuxièmes informations caractéristiques sont extraites d'un code-barres ou acquises directement d'un label de texte, dans lequel le code-barres ou le label de texte sont collés à la partie spécifique du produit ;
ledit appareil comprenant, en outre :
un module d'analyse adapté pour comparer les deuxièmes informations caractéristiques aux premières informations caractéristiques pour déterminer si les premières données visuelles et les deuxièmes données visuelles affichent le même état ou la même partie du produit, en analysant de cette façon une partie correspondante dans la description de produit, et en renvoyant un résultat d'analyse ;
dans lequel les données visuelles sont des images ou des vidéos et les données visuelles et les informations caractéristiques ont une relation de correspondance une à une,
de préférence, dans lequel la description de produit est au moins une d'un texte, d'une image, d'un format audio ou d'un format vidéo.

10. Appareil d'analyse selon la revendication 9, dans lequel le module d'acquisition de données visuelles comprend un appareil de prise de vue, pour prendre une image d'un certain état ou d'une certaine partie d'un produit ou des deuxièmes informations caractéristiques, pour acquérir les deuxièmes données visuelles ou acquérir directement les deuxièmes informations caractéristiques,
dans lequel ledit appareil d'analyse comprend également un module de traitement de données visuelles adapté pour sélectionner une portion contenant les deuxièmes données visuelles à partir des données visuelles de grande taille comme deuxièmes données visuelles ; ou pour sélectionner une portion contenant les deuxièmes informations caractéristiques à partir des données visuelles de grande taille comme deuxièmes informations caractéristiques.

11. Appareil d'analyse selon la revendication 9, dans lequel le résultat d'analyse comprend une certaine partie dans la description de produit ou au moins une des indications de position d'une certaine partie dans la description de produit.

12. Appareil d'analyse selon la revendication 9, comprenant également un premier module d'entrée adapté pour entrer et afficher des premières données visuelles ou les premières informations caractéristiques de celles-ci d'un certain état ou d'une certaine partie d'un produit décrit par au moins une certaine partie dans la description de produit, établir une relation de correspondance entre la au moins certaine partie dans la description de produit et les premières données visuelles ou les premières informations caractéristiques de celles-ci, et enregistrer la au moins certaine partie dans la description de produit, des premières données visuelles ou des premières informations caractéristiques de celles-ci et une relation de correspondance entre elles dans le module d'enregistrement.

13. Appareil d'analyse selon la revendication 9, comprenant également un deuxième module d'entrée adapté pour entrer au moins une certaine partie dans la description de produit, établir une relation de correspondance entre la au moins certaine partie dans la description de produit et les premières données visuelles ou les premières informations caractéristiques de celles-ci pour afficher un certain état ou une certaine partie d'un produit décrit, et enregistrer la au moins certaine partie dans la description de produit, les premières données visuelles ou les premières informations caractéristiques de celles-ci et une relation de correspondance entre elles dans le module d'enregistrement.

14. Système d'analyse d'informations d'analyse basée sur l'image pour une description de produit, comprenant un dispositif de réseau ou une pluralité de dispositifs de réseau interconnectés par un réseau, chaque dispositif étant un appareil selon la revendication 9, et comprenant également :
un module d'enregistrement adapté pour enregistrer la description de produit, des premières données visuelles ou des premières informations caractéristiques de celles-ci pour afficher un certain état ou une certaine partie d'un produit décrit dans au moins une certaine partie dans la description de produit et une relation de correspondance entre les premières données visuelles ou les premières informations caractéristiques de celles-ci et au moins une certaine partie dans la description de produit sur au moins un dispositif de réseau ;
dans lequel les données visuelles sont des images ou des vidéos, les données visuelles et les informations caractéristiques ont une relation de correspondance une à une, et le dispositif de réseau comprend un serveur réseau et une extrémité client,
dans lequel la description de produit est au moins un d'un texte, d'une image, d'un format audio ou d'un format vidéo.

15. Système d'analyse selon la revendication 14, dans lequel le dispositif de réseau comprend aussi un module d'extraction de premières informations caractéristiques adapté pour extraire des premières informations caractéristiques des premières données visuelles,
dans lequel ledit système d'analyse comprend aussi un module d'analyse pour comparer les deuxièmes informations caractéristiques aux premières informations caractéristiques pour déterminer si les premières données visuelles et les deuxièmes données visuelles affichent le même état ou la même partie du produit, en analysant de cette façon une partie correspondante dans la description de produit, et en renvoyant un résultat d'analyse ; les deuxièmes informations caractéristiques sont envoyées depuis un réseau, ou les deuxièmes données visuelles sont envoyées depuis le réseau, et les deuxièmes informations caractéristiques sont extraites des deuxièmes données visuelles par un module d'extraction de deuxièmes informations caractéristiques.

16. Système d'analyse selon la revendication 14, dans lequel le résultat d'analyse comprend une certaine partie dans la description de produit ou au moins une des indications de position d'une certaine partie dans la description de produit.

17. Système d'analyse selon la revendication 14, comprenant également un premier module d'entrée adapté pour entrer et afficher des premières données visuelles ou les premières informations caractéristiques de celles-ci d'un certain état ou d'une certaine partie d'un produit décrit par au moins une certaine partie dans la description de produit, établir une relation de correspondance entre la au moins une certaine partie dans la description de produit et les premières données visuelles ou les premières informations caractéristiques de celles-ci, et enregistrer la au moins certaine partie dans la description de produit, les premières données visuelles ou les premières informations caractéristiques de celles-ci et une relation de correspondance entre elles dans le module d'enregistrement.

18. Système d'analyse selon la revendication 14, comprenant également un deuxième modèle d'entrée adapté pour entrer au moins une certaine partie dans la description de produit, établir une relation de correspondance entre la au moins certaine partie dans la description de produit et les premières données visuelles ou les premières informations caractéristiques de celles-ci pour afficher un certain état ou une certaine partie d'un produit décrit, et enregistrer la au moins certaine partie dans la description de produit, les premières données visuelles ou les premières informations caractéristiques de celles-ci et une relation de correspondance entre elles dans le module d'enregistrement.

19. Dispositif client d'analyse d'informations d'analyse basée sur l'image pour une description de produit, comprenant :
un module d'acquisition de données visuelles adapté pour acquérir des deuxièmes données visuelles d'un certain état ou d'une certaine partie du produit ou acquérir directement des deuxièmes informations caractéristiques des deuxièmes données visuelles d'un certain état ou d'une certaine partie du produit ;
dans lequel par l'intermédiaire d'un réseau, basé sur les deuxièmes données visuelles ou deuxièmes informations caractéristiques, la certaine partie de la description de produit est analysée, et la certaine partie de la description de produit décrit un certain état ou une certaine partie du produit affiché par les deuxièmes données visuelles ;
dans lequel les données visuelles sont des images ou des vidéos et les données visuelles et les informations caractéristiques ont une relation de correspondance une à une,
dans lequel ladite extrémité client d'analyse comprend aussi un module d'extraction de deuxièmes informations caractéristiques adapté pour extraire les deuxièmes informations caractéristiques des deuxièmes données visuelles, dans lequel les deuxièmes informations caractéristiques sont extraites d'un code-barres ou acquises directement d'un label de texte, dans lequel le code-barres ou le label de texte sont collés à la partie spécifique du produit,
dans lequel la description de produit est au moins un d'un texte, d'une image, d'un format audio ou d'un format vidéo.

20. Extrémité client d'analyse selon la revendication 19, comprenant aussi un module d'extraction de premières informations caractéristiques, dans lequel les premières données visuelles sont téléchargées depuis le réseau, et les premières informations caractéristiques sont extraites des premières données visuelles par le module d'extraction de premières informations caractéristiques,
dans lequel, le module d'extraction de premières informations caractéristiques et le module d'extraction de deuxièmes informations caractéristiques sont le même module.

21. Extrémité client d'analyse selon la revendication 20, comprenant aussi un module d'analyse pour comparer les deuxièmes informations caractéristiques aux premières informations caractéristiques afin de déterminer si les premières données visuelles et les deuxièmes données visuelles affichent le même état ou la même partie du produit, en analysant de cette façon une partie correspondante dans la description de produit, et en renvoyant un résultat d'analyse,
dans laquelle le résultat d'analyse comprend une certaine partie dans la description de produit ou au moins une des indications de position d'une certaine partie dans la description de produit.

22. Extrémité client d'analyse selon la revendication 19, dans laquelle, le module d'acquisition des données visuelles comprend un appareil de prise de vue, pour prendre une image d'un certain état ou d'une certaine partie d'un produit ou des deuxièmes informations caractéristiques, pour acquérir les deuxièmes données visuelles ou acquérir directement les deuxièmes informations caractéristiques.

23. Extrémité client d'analyse selon la revendication 19, comprenant aussi un module de traitement des données visuelles, sélectionnant une portion contenant les deuxièmes données visuelles à partir des données de grande taille comme deuxièmes données visuelles ; ou sélectionnant une portion contenant les deuxièmes informations caractéristiques à partir des données visuelles de grande taille comme deuxièmes informations caractéristiques.

24. Extrémité client d'analyse selon la revendication 19, comprenant aussi un premier module d'entrée adapté pour entrer et afficher des premières données visuelles ou les premières informations caractéristiques de celles-ci d'un certain état ou d'une certaine partie d'un produit décrit par au moins une certaine partie dans la description de produit, établir une relation de correspondance entre la au moins certaine partie dans la description de produit et les premières données visuelles ou les premières informations caractéristiques de celles-ci, et enregistrer ou télétransmettre localement la au moins certaine partie dans la description de produit, les premières données visuelles ou les premières informations caractéristiques de celles-ci et une relation de correspondance entre elles par l'intermédiaire d'un réseau.

25. Extrémité client d'analyse selon la revendication 19, comprenant aussi un deuxième module d'entrée adapté pour entrer au moins une certaine partie dans la description de produit, établir une relation de correspondance entre la au moins une certaine partie dans la description de produit et les premières données visuelles ou les premières informations caractéristiques de celles-ci pour afficher un certain état ou une certaine partie d'un produit décrit, et enregistrer ou télétransmettre localement la au moins certaine partie dans la description de produit, les premières données visuelles ou les premières informations caractéristiques de celles-ci et une relation de correspondance entre elles par l'intermédiaire d'un réseau.
